# EUROPÄISCHE PATENTSCHRIFT

(11) **EP 2 771 762 B1**
(45) Veröffentlichungstag und Bekanntmachung des Hinweises auf die Patenterteilung: **14.03.2018**
(21) Anmeldenummer: 12772259.3
(22) Anmeldetag: 26.09.2012
(51) Int. Cl.: G06F 1/18, G06F 1/16

(54) **COMPUTER-GEHÄUSE UND ANORDNUNG**
COMPUTER HOUSING AND ARRANGEMENT
BOÎTIER D'ORDINATEUR ET AGENCEMENT

(30) Priorität: 28.10.2011 DE 102011117225
(43) Veröffentlichungstag der Anmeldung: 03.09.2014
(73) Patentinhaber: Fujitsu Limited, Kawasaki-shi Kanagawa 211-8588 (JP)
(72) Erfinder: SCHELSHORN, Lorenz, 86179 Augsburg (DE); KÖHLER, Friedrich, 86179 Augsburg (DE); WEIDNER, Wilfried, 86343 Königsbrunn (DE)
(74) Vertreter: Epping - Hermann - Fischer
(86) Internationale Anmeldenummer: PCT/EP2012/069008
(87) Internationale Veröffentlichungsnummer: WO 2013/060547

(56) Entgegenhaltungen:
- US-A- 5 661 640
- US-A1- 2003 030 974
- US-A1- 2010 053 869
- US-A1- 2011 122 576

## Beschreibung

Die Erfindung betrifft ein Computer-Gehäuse zur Aufnahme von zumindest einem Motherboard, einer Stromversorgung und weiteren Modulen und eine Anordnung mit einem Gehäuse der oben genannten Art, zumindest einem Motherboard, einer Stromversorgung und weiteren Modulen.

Bisher wurden die Einzelteile - das Motherboard, die Stromversorgung, das Power-Board und so weiter - so angeordnet, dass jedes Einbauteil unabhängig von den anderen Einbauteilen ausgetauscht werden konnte. Das Gehäuse durfte aber nicht vergrößert werden. Durch diese unabhängige Anordnung bei gleicher Gehäusegröße ist der Platz für das Motherboard und die Stromversorgung begrenzt und die Standardeinbauteile können nicht mehr verwendet werden. Stattdessen müssen teurere besondere Einbauteile, wie ein mehrlagiges Motherboard und/oder eine Stromversorgung mit exklusiven Bauteilen verwendet werden.

In der US 2010/053869 A1 wird ein Computer-Gehäuse beschrieben, das mit einem oberen Gehäuseteil und einem unteren Gehäuseteil zweiteilig ausgebildet ist. Der untere Gehäuseteil weist Schienen auf, die zum Aufnehmen eines Trägers vorgesehen sind. Auf dem Träger werden das Motherboard und weitere Module montiert. Anschließend wird der bestückte Träger in den Schienen des unteren Gehäuseteils hineingeschoben.

Die US 5 661 640 A beschreibt einen zweiteilig ausgebildeten Motherboardträger zur Montage von Motherboards oder sonstigen Leiterplatten verschiedener Größe in einem vorgegebenen Gehäuse. Die Größe des Motherboardträgers wird hierbei an die Größe des Motherboards angepasst, damit der im Träger integrierte TEM-Schutz effektiv funktionieren kann. Nach der Anpassung an die Größe des Motherboards wird jede Teil des Motherboardträgers mit Schrauben am Gehäuse befestigt.

Die US 2003/030974 A1 beschreibt ein Computergehäuse zur Aufnahme eines Festplattenlaufwerks, eines Motherboards und einer Interfacekarte mit möglichst niedriger Bauhöhe. Das Gehäuse weist zwei Ebenen auf, wobei das Motherboard auf der oberen Ebene angeordnet ist und das Festplattenlaufwerk und die Interfacekarte unterhalb des Motherboards angeordnet sind. Das Motherboard liegt auf langen Pfosten und ist auf den Pfosten mit Schrauben befestigt.

Der Erfindung liegt daher die Aufgabe zugrunde, eine Lösung für die Anordnung von Modulen in einem Computer-Gehäuse aufzuzeigen, die die Verwendung von kostengünstigen Einbauteilen erlaubt, ohne dass die Gehäusegröße vergrößert werden muss.

Diese Aufgabe wird erfindungsgemäß dadurch gelöst, dass das Gehäuse mindestens eine erste Ebene und eine zweite Ebene aufweist, wobei die zweite Ebene horizontal über der ersten Ebene angeordnet ist, und ein zumindest zweiteiliger Motherboardträger auf der zweiten Ebene angeordnet ist, wobei ein erster Teil des Motherboardträgers fest mit dem Gehäuse verbunden ist und ein zweiter Teil des Motherboardträgers herausnehmbar ausgebildet ist.

Diese Aufgabe wird weiterhin erfindungsgemäß durch eine Anordnung gelöst, bei der das Gehäuse nach einem der Ansprüche 1 bis 3 ausgebildet ist, unter dem ersten Teil des Motherboardträgers auf der ersten Ebene die Stromversorgung angeordnet ist und unter dem zweiten Teil des Motherboardträgers auf der ersten Ebene ein Stromversorgungskabel und die weiteren Module angeordnet sind.

Dadurch, dass das Gehäuse in zwei Ebenen horizontal geteilt wird, entsteht bei der gleichen Gehäusegröße mehr Einbaufläche, das heißt, mehrere Möglichkeiten um Zusatzteile einzubauen. Die erste Ebene und zweite Ebene sind ungefähr parallel zueinander angeordnet.

Durch den herausnehmbaren zweiten Teil des Motherboardträgers sind die darunterliegenden Bauteile im Servicefall auch gut zugänglich, da im Servicefall der zweite Teil des Motherboardträgers demontiert werden kann. Somit ist freier Zugriff auf die Module und Zusatzboards in der ersten Ebene ermöglicht.

Der erste Teil des Motherboardträgers ist wegen Steifigkeit und Fertigungstoleranzen bevorzugt fest mit dem Chassis verbunden. Der erste Teil des Motherboardträgers ist bevorzugt am hinteren Ende des Gehäuses montiert.

Auf der ersten Ebene sind bevorzugt die Stromversorgung, Module wie das Power-Board, Batterien, das PSU-Kabel und sonstige Zusatzteile angeordnet. Die Stromversorgung ist bevorzugt unter dem ersten Teil des Motherboardträgers montiert. Die Zusatzmodule und Zusatzteile sind bevorzugt unter dem herausnehmbaren zweiten Teil des Motherboardträgers angeordnet, damit sie zwecks eventuellen Austauschens besser zugänglich sind. Dieser Bereich der ersten Ebene kann für Erweiterungen und Zusatzmodule voll ausgenutzt werden, ohne das Gehäuse zu vergrößern und ohne die Montage und Servicefreundlichkeit zu beeinträchtigen.

Das Motherboard ist auf der zweiten Ebene auf dem Motherboardträger befestigt. Das Motherboard ist dem Motherboardträger entsprechend zweiteilig ausgebildet.

Weitere Vorteile der Erfindung beziehungsweise vorteilhafte Ausgestaltungen ergeben sich aus den Unteransprüchen sowie der nachfolgenden Figurenbeschreibung.

Nachfolgend wird anhand eines in den Figuren dargestellten Ausführungsbeispiels die Erfindung näher erläutert. Die
Figuren zeigen:
- Figur 1: eine perspektivische Ansicht eines offenen Computer-Gehäuses gemäß der Erfindung, bei dem das herausnehmbare zweite Teil des Motherboardträgers bereits herausgenommen ist,
- Figur 2: eine perspektivische Ansicht des in Figur 1 dargestellten offenen Computer-Gehäuses mit dem herausnehmbaren zweiten Teil des Motherboardträgers eingebaut und
- Figur 3: ein seitlicher Querschnitt eines Abschnitts des in Figur 2 dargestellten Computer-Gehäuses.

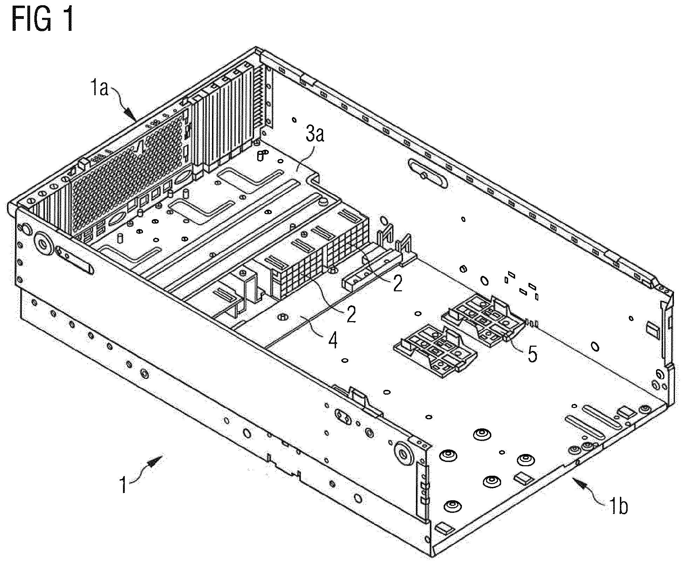

Figur 1 zeigt ein Computergehäuse 1 gemäß der Erfindung ohne Deckel. Im hinteren Bereich des Gehäuses 1, nämlich dem Ende des Gehäuses 1a, das gegenüber von der geöffneten Frontseite 1b liegt, ist auf der ersten Ebene (die untere Ebene) die Stromversorgung 2 angeordnet. Auf einer zweiten Ebene, nämlich der oberen Ebene, ist ein erster Teil eines Motherboardträgers 3a direkt über der Stromversorgung 2 angeordnet. Der erste Teil des Motherboardträgers 3a ist fest mit dem Gehäuse 1 verbunden. Das Motherboard ist nicht eingebaut und daher nicht abgebildet.

Neben der Stromversorgung 2 ist ein Powerboard 4 montiert. Das Powerboard 4 ist nicht von dem ersten Teil des Motherboard-Trägers 3a bedeckt. Batteriehalter 5 sind auch auf der ersten Ebene angeordnet.

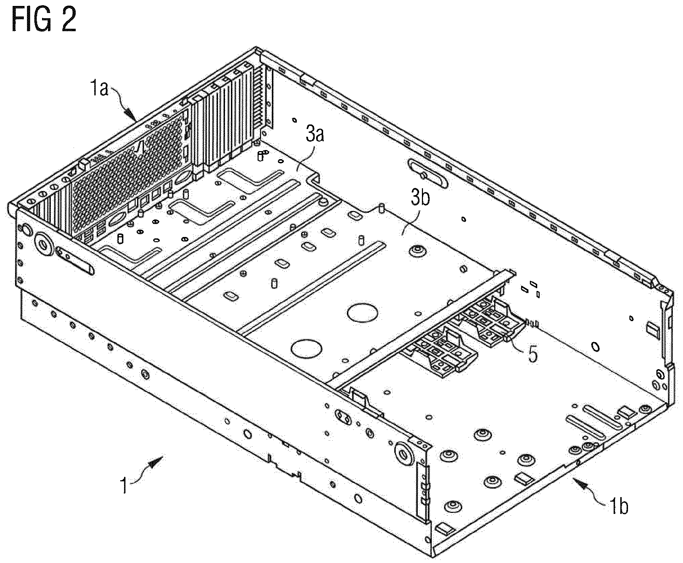

In Figur 2 ist ein mobiler Teil des Motherboard-Trägers 3b, nämlich der zweite Teil des Motherboard-Trägers 3b, auf der zweiten Ebene neben dem ersten Teil 3a montiert. Somit wird der Bereich der ersten Ebene zugedeckt, in dem sich das Powerboard 4 und die Batteriehalter 5 befinden. Weitere Module oder Zusatzboards können auch in diesem Bereich angeordnet sein. Durch den herausnehmbaren zweiten Teil des Motherboard-Trägers 3b kann im Servicefall auf die Module unter dem mobilen Teil 3b einfacher zugegriffen werden.

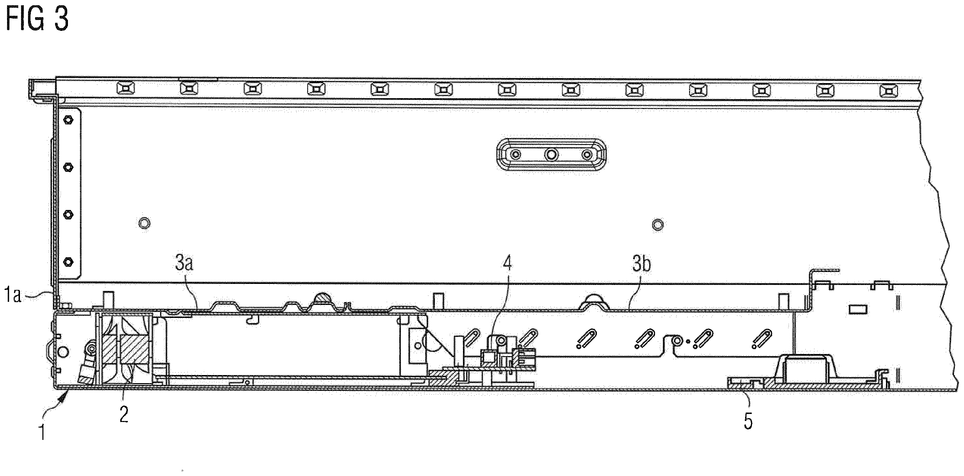

Figur 3 zeigt einen Abschnitt des in Figur 2 abgebildeten Gehäuses 1 im Querschnitt. Hier ist deutlich zu sehen, dass die Stromversorgung 2 unter dem ersten Teil des Motherboard-Trägers 3a angeordnet ist und dass das Powerboard 4 und Batteriehalter 5 unter dem herausnehmbaren zweiten Teil des Motherboard-Trägers 3b angeordnet sind.

### Bezugszeichenliste

- 1: Computer-Gehäuse
- 1a: hinteres Ende des Gehäuses
- 1b: geöffnete Frontseite des Gehäuses
- 2: Stromversorgung
- 3a: Erster Teil des Motherboardträgers (fest)
- 3b: Zweiter Teil des Motherboardträgers (mobil)
- 4: Powerboard
- 5: Batteriehalter

## Patentansprüche

1. Computer-Gehäuse (1) zur Aufnahme von zumindest einem Motherboard, einer Stromversorgung (2) und weiteren Modulen, wobei das Gehäuse (1) mindestens eine erste Ebene und eine zweite Ebene aufweist, wobei die zweite Ebene horizontal über der ersten Ebene angeordnet ist, **dadurch gekennzeichnet, dass** ein zumindest zweiteiliger Motherboardträger (3a, 3b) auf der zweiten Ebene angeordnet ist, wobei ein erster Teil des Motherboardträgers (3a) fest mit dem Gehäuse (1) verbunden ist und ein zweiter Teil des Motherboardträgers (3b) herausnehmbar ausgebildet ist.

2. Gehäuse (1) nach Anspruch 1, wobei der erste Teil des Motherboardträgers (3a) am hinteren Ende des Gehäuses (1a) angeordnet ist.

3. Gehäuse (1) nach Anspruch 1 oder 2, wobei der erste (3a) und zweite Teil des Motherboardträgers (3b) nebeneinander angeordnet sind.

4. Anordnung zur Aufnahme von zumindest einem Motherboard, einer Stromversorgung (2) und weiteren Modulen in einem Computer-Gehäuse (1), wobei
- das Gehäuse (1) nach einem der Ansprüche 1 bis 3 ausgebildet ist,
- unter dem ersten Teil des Motherboardträgers (3a) auf der ersten Ebene die Stromversorgung (2) angeordnet ist und
- unter dem zweiten Teil des Motherboardträgers (3b) auf der ersten Ebene ein Stromversorgungskabel und die weiteren Module angeordnet sind.

5. Anordnung nach Anspruch 4, wobei ein Motherboard auf dem zweiteiligen Motherboardträger (3a, 3b) montiert ist.

## Claims

1. A computer casing (1) that accommodates at least one motherboard, a power supply (2) and further modules, wherein the casing (1) comprises at least a first level and a second level, wherein the second level is arranged horizontally above the first level,
**characterized in that**
an at least two-part motherboard carrier (3a, 3b) is arranged on the second level, wherein a first part of the motherboard carrier (3a) is fixedly connected to the casing (1) and a second part of the motherboard carrier (3b) is configured to be removable.

2. The casing (1) according to claim 1,
wherein the first part of the motherboard carrier (3a) is arranged at the rear end of the casing (1a).

3. The casing (1) according to claim 1 or 2,
wherein the first part (3a) and second part of the motherboard carrier (3b) are arranged side by side.

4. An arrangement that accommodates at least one motherboard, a power supply (2) and further modules in a computer casing (1), wherein
- the casing (1) is configured according to one of claims 1 to 3,
- the power supply (2) is arranged on the first level below the first part of the motherboard carrier (3a), and
- a power supply cable and the further modules are arranged on the first level below the second part of the motherboard carrier (3b).

5. The arrangement according to claim 4, wherein a motherboard is mounted on the two-part motherboard carrier (3a, 3b).

## Revendications

1. Boîtier d'ordinateur (1) destiné à loger au moins une carte mère, une alimentation en courant (2) et des modules supplémentaires, le boîtier (1) présentant au moins un premier niveau et un deuxième niveau, le deuxième niveau étant disposé horizontalement au-dessus du premier niveau,
**caractérisé en ce qu'**
un support (3a, 3b) de carte mère réalisé au moins en deux parties est disposé sur le deuxième niveau, une première partie du support (3a) de carte mère étant reliée de manière fixe au boîtier (1) et une deuxième partie du support (3b) de carte mère étant réalisée de manière amovible.

2. Boîtier (1) selon la revendication 1,
la première partie du support (3a) de carte mère étant disposée sur l'extrémité arrière du boîtier (1a).

3. Boîtier (1) selon la revendication 1 ou 2,
la première partie (3a) et la deuxième partie du support (3b) de carte mère étant disposées l'une à côté de l'autre.

4. Agencement destiné au logement d'au moins une carte mère, une alimentation en courant (2) et de modules supplémentaires dans un boîtier d'ordinateur (1),
- le boîtier (1) étant réalisé selon l'une quelconque des revendications 1 à 3,
- l'alimentation en courant (2) étant disposée sur le premier niveau, en dessous de la première partie du support (3a) de carte mère, et
- un câble d'alimentation en courant et les modules supplémentaires étant disposés sur le premier niveau, en dessous de la deuxième partie du support (3b) de carte mère.

5. Agencement selon la revendication 4,
une carte mère étant montée sur le support (3a, 3b) de carte mère réalisé en deux parties.
